Europäisches Patentamt

European Patent Office

Office européen des brevets

(19)

(11) Publication number: **0 417 813 A2**

# EUROPEAN PATENT APPLICATION

(12)

(21) Application number: 90117767.5

(22) Date of filing: 14.09.90

(51) Int. Cl.5: **H01H 33/59**, H01H 33/16

(30) Priority: 14.09.89 JP 239608/89

(43) Date of publication of application:
20.03.91 Bulletin 91/12

(84) Designated Contracting States:
CH DE FR LI SE

(71) Applicant: HITACHI, LTD.
6, Kanda Surugadai 4-chome
Chiyoda-ku, Tokyo 100(JP)

(72) Inventor: Ohno, Masatomo
29-20, Hanayamacho 1-chome
Hitachi-shi, Ibaraki-ken(JP)

Inventor: Yamagiwa, Tokio
34-22, Oonumacho 3-chome
Hitachi-shi, Ibaraki-ken(JP)
Inventor: Fukuchi, Tetsuo
1474, Machiyacho, Hitachi Ohta-shi
Ibaraki-ken(JP)
Inventor: Suzuki, Akira
18-22, Mizukicho 1-chome
Hitachi-shi, Ibaraki-ken(JP)

(74) Representative: Strehl, Schübel-Hopf,
Groening
Maximilianstrasse 54 Postfach 22 14 55
W-8000 München 22(DE)

(54) Switchgear having a breaking point operable in an insulating gas.

(57) A gas-insulated switchgear having at least a circuit breaker, a conductor system connected to the circuit breaker for carrying a current thereto, and a grounded enclosure encasing the circuit breaker and the conductor system together with an insulating medium gas, which comprises: at least one capacitor which is connected, at one end thereof, to a conductor of the conductor system which is on a line side with respect to a breaking point of the circuit breaker, and connected, at the other end thereof, to the grounded enclosure.

## FIG. I

# SWITCHGEAR HAVING A BREAKING POINT OPERABLE IN AN INSULATING GAS

## BACKGROUND OF THE INVENTION

### a. Field of the Invention

This invention relates to a switchgear having a breaking point operable in an insulating gas. More particularly, this invention relates to a gas-insulated switchgear having a capacitor accommodated within a grounded tank and a gas circuit breaker including a capacitor and a surge arrester, and a composite capacitor-surge arrester unit for use in the switchgear such as a gas-insulated switchgear and a gas circuit breaker.

### b. Background Art

A gas-insulated switchgear (GIS) is usually installed in a substation or a power station, and used generally at a connecting point between a power line and a wiring within the station. The gas-insulated switchgear is formed of a gas circuit breaker (GCB) and other components of the station, such as a disconnecting switch (DS), an earthing switch (ES), a surge arrester (SA), an instrument transformer (IT), and conductors and bus-bars (BUS) connecting the components each other. These constituents are encased within a grounded metal enclosure together with and insulating medium such as SF6 gas.

In the conventional gas-insulated switchgear or gas circuit breaker having a plurality of breaking points, a capacitor is used for equalizing voltages to be allotted to the respective breaking points. Recently, the capacitor is employed also for the purpose of improving an interrupting performance at a time of a short line fault (SLF).

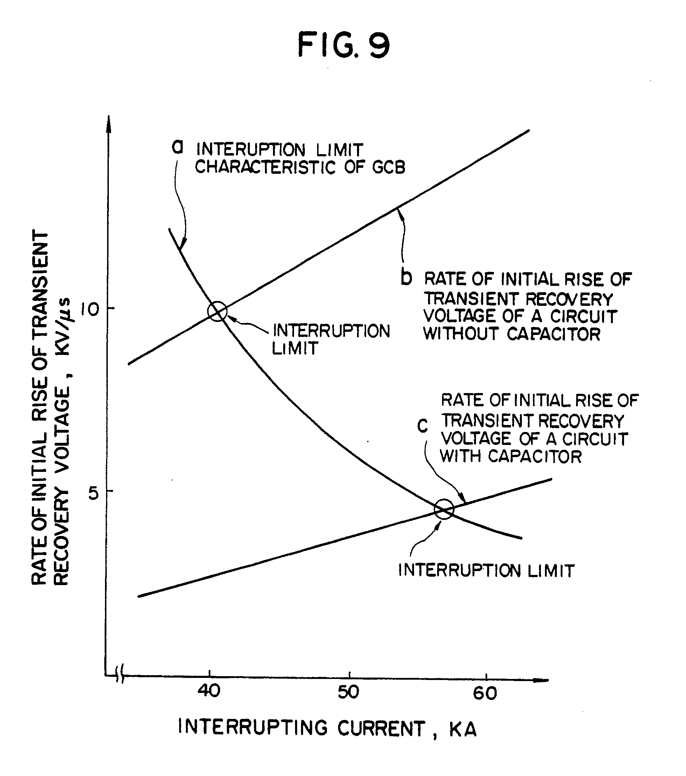

The SLF interrupting limit is as shown by an interrupting limit characteristic curve a of Fig. 9. As an interrupting current increases, a rate of an initial rise of a transient recovery voltage interruptable by the circuit breaker becomes lower. On the other hand, a rate of an initial rise of a transient recovery voltage (TRV) of a circuit becomes higher in proportion as the interrupting current increases as can be seen from a curve b. An intersection of the curves a and b indicates the interrupting limit. In case where a capacitor is connected between poles of the circuit breaker or on the side of a power line, a rate of initial rise of TRV of the circuit becomes lower as shown by a curve c in Fig. 9. This shows that the capacitor connected between the poles of the circuit breaker or on the side of the power line has an effect of improving the interrupting limit. The interrupting limit characteristic of the gas circuit breaker depends upon a configuration or make of the breaker.

It is a recent trend of a development of a gas circuit breaker to reduce the number of the breaking points. When the number of the breaking points is reduced, for example, single- point breaking/phase is used instead of two-point breaking/phase, a voltage applied to one breaking point becomes double, rendering the interrupting conditions more severe. In general, there are two measures to improve the interrupting performance: one is to improve the interrupting limit characteristic of the gas circuit breaker and the other is to increase a capacitance of the capacitor employed. These measures may often be used in combination.

The capacitor employed for the purposes as mentioned above is generally provided between the poles of the circuit breaker.

However, if a task imposed on the switchgear becomes as severe as 63kA of interrupting current for single-breaking point/phase, the capacitance of the capacitor should be large, rendering a section area of a capacitor element larger, or increasing the number of the capacitor elements. This makes a diameter of the tank larger, when the capacitors are juxtaposed between the poles of the circuit breaker. Or, if there is a limit in the size of the tank, it becomes difficult or impossible to dispose the capacitors between the poles. Especially, in the gas-insulated switchgear, an entire space which the switchgear can occupy is limited, and the configuration of the switchgear is very complicated. For this reason, the provision of the capacitors of a large capacitance between the poles is more difficult in the gas-insulated switchgear as compared with the gas circuit breaker.

As the capacitor is employed for the purpose of suppressing the initial rise of transient recovery voltage by interruption due to SLF, it is not necessary to provide the capacitor in every circuit breaker. It suffices to provide a capacitor only at the power line side of a circuit breaker used for the power line. In this case, the capacitor may be disposed outside the enclosure of the gas circuit breaker instead of disposing between the poles of the breaking point. For example, the capacitor may be mounted beside a bushing.

Alternatively, as disclosed in Japanese Patent Application laid-Open (KOKAI) No. 53-14375, a capacitor may be provided in a cylindrical insulator support. More particularly, a gas circuit breaker having a breaking section provided within a metal tank of an earth potential, a line conductor electrically connected to the breaking section and the cylindrical insulator support for supporting the breaking section while electrically insulating the same from the metal tank. The metal tank has an opening, which is air-tightly sealed by a removably fitted lid member, and a capacitor unit of an outer diameter slightly smaller than an inner diameter of the opening is attached to an inner surface of the lid member. The capacitor unit has an end which is electrically connected to the line conductor and another end which is removably, mechanically supported at the metal tank.

Similar gas circuit breakers are disclosed in Japanese Patent Application Laid-Open (KOKAI) No. 52-9869 and 52-16670.

With the arrangement where the capacitor is mounted beside the bushing as disclosed in the reference, said capacitor is encased in a housing made of an insulator, which is provided separately from the circuit breaker tank. This is rather disadvantageous in an economic meaning. In addition, since this heavy member is mounted beside the bushing, the structure should be reinforced, and this further increases the cost of the breaker.

According to Japanese Patent Application Laid-Open No. 53-14375, the capacitor is disposed at a side of the metal tank. In this configuration, a capacitor of a large capacitance can be mounted without increasing the diameter of the tank.

In case where an interrupting current is rather small, a capacitance of the capacitor used for suppressing a rate of a rise of a transient recovery voltage is not needed to be so large. Mainly for this reason, the capacitor can be disposed between the poles of the breaking point. Especially in the circuit breaker having two breaking points, the capacitor for sharing the voltage allotted to the respective breaking points may be used in common for the purpose of suppressing a rate of a rise of a transient recovery voltage as described above.

Recently, however, a gas-insulated switchgear for a larger interrupting current has been demanded. In addition thereto, it is required that the circuit breaker have a single breaking point for improving a reliability of the switchgear as well as an improved interrupting limit. For this reason, it has been desired to develop a gas-insulated switchgear including a capacitor of a large capacitance for suppressing a rate of a rise of a transient recovery voltage.

However, the gas-insulated switchgear has a rather complicated configuration as compared with the gas circuit breaker. More particularly, the gas-insulated switchgear includes various components in en enclosure as well as the circuit breaker, and these components are connected to bus-bars or conductors, so that the enclosure encasing these components should have a complicated configuration. For example, thick tubular members are connected in three-dimensional arrangement in association with various devices within the enclosure. This arrangement is varied depending upon a kind, number or layout of the devices included.

It might be a key probled to be solved how to provide a capacitor in the gas-insulated switchgear for a large current. The solution should also solve a task of an easy maintenance operation or flexible application of the capacitor for allowing a possible change of performance of GIS.

It is therefore a first object of the present invention to provide a gas-insulated switchgear which is capable of installing a capacitor of a large capacitance therein and improving an interruption limit of a circuit breaker incorporated therein.

It is a second object of the present invention to provide a gas-insulated switchgear which is easy in a maintenance operation and capable of attaining a change of capacitance, such as an increase of a capacitance.

The gas-insulated switch gear includes the surge arrester as described above. The surge arrester is provided for suppressing a generation of a transient voltage due to lightning striking a power line. By this reason, the surge arrester is disposed on the line side like the capacitor for suppressing a rate of a rise of a transient recovery voltage.

Heretofore, the capacitor and the surge arrester are provided separately in a gas circuit breaker as can be seen from the references as recited above. By this reason, casings for housing the capacitors and the surge arresters as many as the number of the capacitors and the surge arresters are needed, necessitating a large installation space. To solve this problem, it might be proposed that both the capacitor and the surge arrester be encased in one housing. However, there have been no proposal for encasing the capacitor and the surge arrester in the same housing withourt increasing a size of the housing. This is also true with a gas-insulated switchgear.

It is a third object of the present invention to provide a gas circuit breaker or a gas-insulated switchgear which is capable of incorporating both a capacitor and a surge arrester without increasing the size of the gas circuit breaker and the gas-insulated switchgear.

To achieve the first object of the present invention as described above, there is provided a gas-insulated switchgear comprising: a circuit breaker, a conductor system connected to the circuit breaker for carrying a current thereto, a grounded enclosure encasing the circuit breaker and the conductor system therein together with an insulating medium gas, and at least one capacitor which is connected, at one end thereof, to a conductor of the conductor system which is on a line side with respect to a breaking point of the circuit breaker, and connected, at another end thereof, to the grounded enclosure.

To achieve the second object, the grounded enclosure comprises at least one insulating partition for sectioning the interior of the grounded enclosure and a plurality of gas chambers sectioned by said at least one insulating partition, and the capacitor is placed in one of the gas chambers where the conductor system on the line side with respect to the breaking point of the circuit breaker is accommodated.

To achieve the third object, there is provide a gas-insulated switchgear which further comprises at least one surge arrester, said surge arrester being provided alone or in combination with the capacitor, at at least one of the connection portions along the conductor system.

In accordance with a further feature of the present invention, there is provided a gas circuit breaker comprising: a circuit breaker; a conductor system connected to the circuit breaker to carry a current thereto; a grounded tank for encasing the circuit breaker and the conductor system together with an insulating medium gas therein; at least one capacitor and surge arrester which are connected, at respective one end, to the conductor system which is on a line side with respect to a breaking point of the circuit breaker, and connected, at respective another end, to the grounded tank; and an insulating partition for sectioning a space for accommodating the capacitor and the surge arrester from a remaining space in the grounded tank to define a small gas chamber in said space for accommodating the capacitor and the surge arrester; said capacitor and surge arrester being placed in said small gas chamber.

Further in accordance with the present invention, there is provided a composite unit suitable for mounting a capacitor to the gas-insulated switchgear or the gas circuit breaker.

The surge arrester employable in the present invention is a surge arrester which is capable of absorbing not only a surge due to lightning, but also various surges in general.

Since at least one capacitor is connected to the conductor system located on the line side with respect to the breaking point of the circuit breaker, a rate of a rise of a transient recovery voltage at a time of SLF can be effectively suppressed. In this case, the capacitor employable in the present invention can be a capacitor of a large capacitance, and the interruption limit of the circuit breaker can be improved.

Tha capacitor may be connected at any desired position of the conductor system so long as the position is on the line side with respect to the breaking point of the circuit breaker. Therefore, the connection position can be selected from positions which have an ample space therein or which are easily accessible. Especially, positions where the conductor system are connected at right angle to each other are preferred. These positions are advantageous in a maintenance operation and easy to cope with a possible change of the capacitance of the capacitor employed.

Furthermore, as different from the conventional arrangement in which the capacitor is interposed between the poles of the breaking point, the position for providing the capacitor can have a more wide choice at a time of designing the switchgear or circuit breaker. Accordingly, it is possible to select a position having an ample space or to mount a plurality of capacitors to provide a desired capacitance, without increasing a diameter of the enclosure.

Besides, since the enclosure is sectioned by the insulating partition, there is no need to withdraw the entire gas of the gas-insulated switch gear, which facilitates an operation of replacement or increase of the capacitors.

In addition, since the surge arrester may be also connected to the conductor system, the surge arrester which is provided separately from the capacitor in the conventional switchgear can be encased within the common grounded enclosure. This saves an installation space. More particularly, since both the capacitor and the surge arrester are connected on the line side of the circuit breaker, they can be placed together to reduce the number of the housings and the size of the entire equipment.

BRIEF DESCRIPTION OF THE DRAWINGS

Fig. 1 is a sectional view showing a relevant part of one form of a gas circuit breaker accroding to the present invention;

Fig. 2 is a similar sectional view showing a relevant part of another form of a gas circuit breaker according to the present invention;

Fig. 3A is a sectional view showing a part of a gas-insulated switchgear according to the present invention;

Figs. 3B, 3C and 3D are sectional views each showing a capacitor unit employed in the gas-insulated switchgear of Fig. 3A;

Fig. 3E is an elevational view showing an exterior configuration of the gas-insulated switchgear;

Fig. 4 is a sectional view showing a part of another form of a gas-insulated switchgear according to the present invention;

Fig. 5 is a similar sectional view showing a part of a still another form of a gas-insulated switchgear according to the present invention;

Fig. 6A is a sectional view showing one form of a capacitor unit employable in the present invention;

Fig. 6B is a perspective view showing another form of a capacitor unit employable in the present invention;

Fig. 7 is a sectional view showing a capacitor unit employed in a gas-insulated switchgear according to the present invention;

Fig. 8 is an elevational view showing a part of a further form of a gas-insulated switchgear according to the present invention; and

Fig. 9 is a graph showing a relationship between an SLF interruption limit of a gas circuit breaker and a capacitance of a capacitor.

## DESCRIPTION OF PREFERRED EMBODIMENTS

Preferred embodiments of the present invention will now be described, referring to the accompanying drawings.

Same or similar parts or portions are denoted by same or similar numerals or characters throughout the drawings.

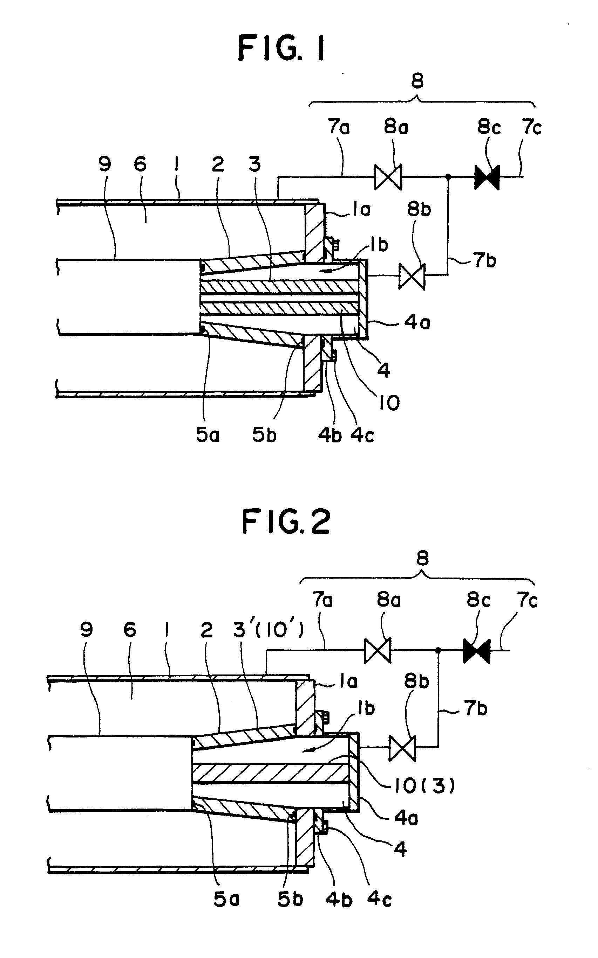

Fig. 1 illustrates part of one form of a gas circuit breaker according to the present invention. The part illustrated in Fig. 1 is a line side of the gas circuit breaker with respect to a breaking or interrupting point of the circuit breaker. The breaking point or other portions of the gas circuit breaker are not shown in the drawing. The portions not illustrated in the drawing may be identical with or similar to those of conventional gas circuit breaker. Or, the portions may be similar to those of a circuit breaker section of gas-insulated switchgears as will be described later in connection with the present invention.

In the embodiment as illustrated, a capacitor and a surge arrester are provided within a grounded tank. More particularly, the gas circuit breaker of this embodiment comprises a breaking section (not shown), a conductor member 9 connected to the breaking section for carrying a current thereto, and a grounded tank 1. The capacitor and the surge arrester are provided in the form of a capacitor unit 3 and a surge arrester unit 10 which are each connected at one end thereof to the conductor member 9 on the line side with respect to the breaking section, and connected at the other end tehreof to the grounded tank 1. The capacitor unit 3 and the surge arrester unit 10 are disposed within a small gas chamber 4 defined by an insulating partition 2 as will be described in detail later. The small gas chamber 4 is formed within the grounded tank 1 and partitioned by the partition 2 from the remaining space within the tank 1.

Although a single capacitor unit 3 and a single surge arrester 10 are shown in Fig. 1, the numbers of the units are not limited to one, and two or more units may be provided.

The grounded tank 1 has an end which is closed by a cover 1a made of an electrically conductive material. The cover 1a has a central opening 1b. To cover the opening 1b, an exterior lid member 4a with a flange 4b is fastened to the cover 1a by bolts 4c. The lid member 4a is made of an electrically conductive material. The grounded tank 1 including the small gas chamber 4 is filled with an insulating medium such as $SF_6$ gas.

The insulating partition 2 is made, for example, of an insulator such as ceramics, connected, at opposite ends thereof, closely to an end of the conductor member 9 and the cover member 1a around the opening 1b through gaskets 5a and 5b, respectively. The insulating partition 2 is cylindrical, or more accurately, the insulating partition 2 as illustrated in Fig. 1 has a truncated conical shape to be interposed between the conductor member 9 and the cover member 1a. The small gas chamber 4 is thus formed within the grounded tank 1. The gas chamber 4 is air-tightly separated from other space within the tank 1 with the gaskets 5a and 5b.

The grounded tank 1 is air-tightly sealed from the outside by the cover 1a and the lid member 4a. The cover 1a and the lid member 4a function as sealing members.

As described above, the capacitor unit 3 and the surge arrester unit 10 are encased within the small gas chamber 4. Each of the capacitor unit 3 and the surge arrester unit 10 is connected, at one end thereof, to the end of the conductor member 9 and, at another end thereof, to the an inner surface of the lid member 4a. Thus, the capacitor unit 3 and the surge arrester unit 10 are electrically connected to the conductor member 9 and the lid member 4a.

The capacitor unit 3 and the surge arrester unit 10 may be removably mounted for convenience of replacement or repair of the units. The units may, of course, be fixedly mounted.

The capacitor unit 3 is made, for example, of a ceramic dielectric material. As examples of the capacitor unit 3, there may be mentioned a ceramic capacitor, epoxy resin molded capacitor, or oil-filled capacitor.

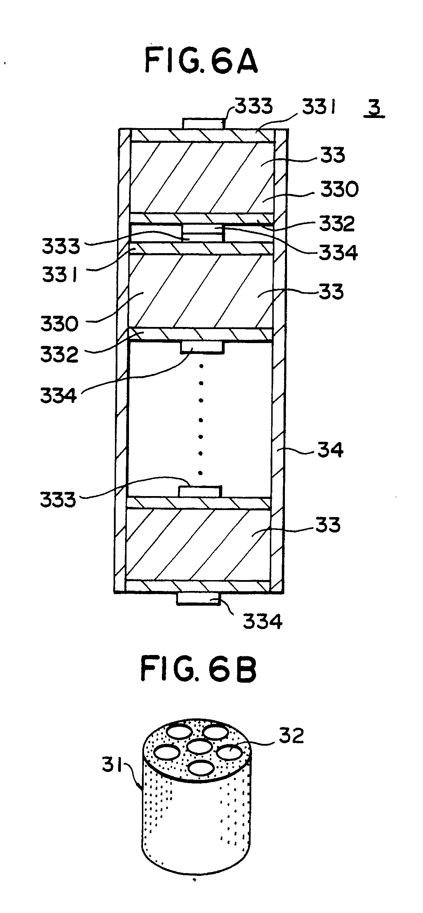

The capacitor unit 3 may be constituted as illustrated in Fig. 6A. The capacitor unit 3 comprises a plurality of capacitor elements 33 and an insulating support 34 for fixing and supporting the capacitor elements stacked. Each of the capacitor elements 33 includes a dielectric member 330 and electrodes 331 and 332 disposed oppositely with respect to the dielectric element 33 sandwiched therebetween. The electrodes 331 and 332 have terminals 333 and 334, respectively, for connection with another, adjacent capacitor element 33 or for external connection.

Alternatively, the capacitor unit 3 may be provided in the form as illustrated in Fig. 6B. The capacitor elements are held in capacitor holding portions 32 of a molded container 31. In this case, the capacitor unit 3 may comprise a plurality of molded containers 31 each holding one or more capacitor elements.

The surge arrester 10 is formed of one or more high-impedance elements. A plurality of high-impedance elements may be stacked in a similar manner to the capacitor unit 3. As an example of the high-impedance element, there may be mentioned a high-resistance element such as ZnO. If necessary or appropriate, the surge arrester 10 may be accommodated in the capacitor holding portions 32 of the molded container 31 together with the capacitor elements. The surge arrester unit 10 preferably has a function of absorbing a surge due to various causes as well as a surge caused upon striking by a lightning.

As the insulating partition 2 sections the interior space of the grounded tank 1, the capacitor unit 3 and the surge arrester unit 10 can be mounted without changing the external configuration or increasing the size of the gas circuit breaker.

The small gas chamber 4 and the remaining space (indicated by 6) within the grounded tank 1 may be under separate supervisory systems which are independently of each other. In the embodiment as illustrated, the gas chamber 4 and the remaining space 6 are connected to pipelines 7a and 7b, respectively. Valves 8a and 8b are provided intermediate the ends of the respective pipelines 7a and 7b. The pipelines 7a and 7b are connected to a common pipeline 7c through a valve 8c. With this arrangement, the small gas chamber 4 and the remaining space 6 may be under a single supervisory system. By operating the valves 8a, 8b and/or 8c, only the gas in the small gas chamber 4 may be withdrawn without influencing the gas in the remaining space within the grounded tank 1.

According to the embodiment as described above, the capacitor and the surge arrester can be mounted within the grounded tank without increasing the external size of the gas circuit breaker, and the capacitor and/or the surge arrester may be handled only by controlling the gas in the small gas chamber without giving an influence to the remaining portions within the tank 1. Thus, maintenance or remodeling of the gas circuit breaker can be carried out easily, and an operating time therefor can be shortened.

A second form of the gas circuit breaker according to the present invention will now be described, referring to Fig. 2.

In this embodiment, the insulating partition 2 is made of a dielectric material which functions as a capacitor. Alike the first embodiment, the cover 1a having a centrally formed opening 1b is fitted at an end of the grounded tank 1. Around the opening 1b, the insulating partition 2 and the lid member 4a are mounted to form the small gas chamber 4.

The insulating partition 2 made, for example, of a dielectric material such as a ceramic, is connected, at one end thereof, to the conductor member 9 and connected, at the other end thereof, to the cover 1a to provide a capacitor.

A surge arrester 10 similar to that of the first embodiment is mounted in the small gas chamber 4 with one end connected to the conductor member 9 and the other end connected to the lid member 4a.

In the present embodiment as illustrated in Fig. 2, the configuration or arrangement of the remaining portions, including the formation of the pipelines and the valves 8a and 8b are similar to those of the embodiment shown in Fig. 1.

As described above, a capacitor 3′ provided in the form of the insulating partition 2 and the surge arrester 10 within the small gas chamber 4 are connected in parallel between the conductor member 9 and the grounded tank 1. Since the partition 2 also functions as a capacitor, the number of parts needed for the gas circuit breaker can be reduced as well as the space occupied by the small gas chamber 4.

Instead of employing the insulating partition 2 made of a material functioning as a capacitor as in the embodiment of Fig. 2, an insulating partition made of a material functioning as a surge arrester, for example a high-resistance material such as ZnO may be employed. In this case, the capacitor unit 3 is mounted within the small gas chamber 4.

Instead of connecting the insulating partition 2 directly to the conductor member 9 as in the foregoing embodiments shown in Figs. 1 and 2 (and as in embodiments which will be described later), the insulating partition 2 may be connected closely to an end member (not shown) made of an electrically conductive material, and the end member may be connected to the conductor member 9. The end member functions both as a sealing member and ils an electrode.

In this case, the cover 1a, the insulating partition 2, the lid member 4a and the end member may be preliminarily assembled to form the small gas chamber 4, and the capacitor unit 3 and the surge arrester 10 are encased within the chamber 4 to provide a composite unit. The end member may be omitted to form the composite unit. When the composite unit is applied to the embodiment shown in Fig. 2, either the capacitor or the surge arrester is provided as the insulating partition and the other is mounted within the chamber.

The present invention may also be applied to a gas-insulated switchgear (GIS). One form of the gas-insulated switchgear according to the present invention will now be descirbed.

In general, GIS is used at a switch yard of a power plant, etc. , and it comprises switching circuits with circuit breakers as main swithcing means, between a bus-bar and a power supply and between the bus-bar and a power line for connection between the power source end and the line end. The switching circuits are juxtaposed along the bus-bar and connected to the bus-bar. They are all enclosed in an enclosure. In this arrangement, when a fault occurs, a circuit breaker proximate to a line having the fault is subjected to an influence of an initial transient recovery voltage. This is true with every switching circuit connected to the bus-bar.

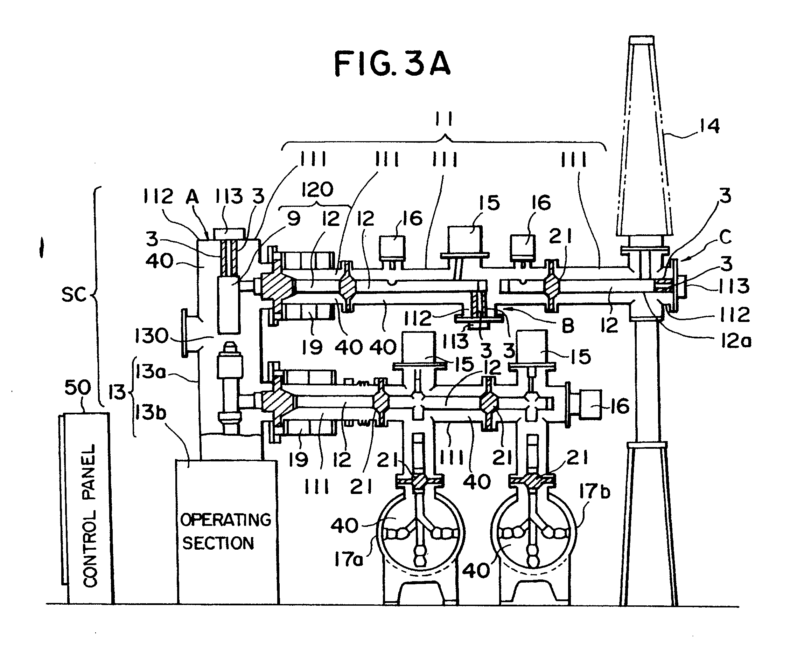

For this reason, one switching circuit is representatively illustrated in Fig. 3A et seq., in which only a part of the line side with respect to the bus-bar is shown. GISs of the present invention, which will be referred to below, comprise at least components as shown in the drawings, but it may comprise further elements not shown in the drawings. A switching circuit provided at the power source side with respect to the bus-bar may include a capacitor unit as will be described later.

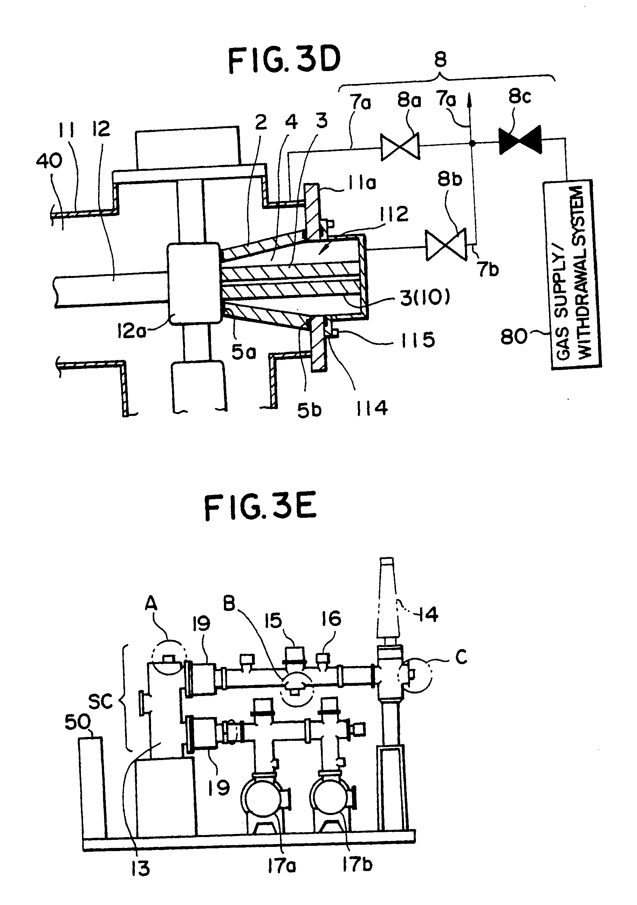

Figs. 3A and 3E illustrate a gas-insulated switchgear according to the present invention. Fig. 3E shows an external configuration of the gas-insulated switchgear. Fig. 3A shows the interior of the gas-insulated switchgear.

The gas-insulated switchgear shown in Figs. 3A and 3E comprises bus-bars 17a, 17b and a plurality of switching circuits SC (only one switch circuit is shown in the figures).

The bus-bars 17a, 17b extend perpendicularly with respect to a plane of the sheet in Figs. 3A and 3E, and they are connected to a plurality of further switching circuits (not shown) along the length of the bus-bars.

The switching circuit SC shown in Fig. 3A is a switching circuit for connecting a line to the bus-bar. The swiching circuit SC comprises at least a circuit breaker 13, a conductor system 120 connected to the circuit breaker 13 for carrying a current thereto, and a grounded enclosure 11 for enclosing the circuit breaker 13 and the conductor system 120 together with an insulating medium gas.

The gas-insulated switchgear further comprises a plurality of capacitor units 3 each of which is connected, at one end thereof, to the conductor system 120 on the line side (on the side of a bushing 14) with respect to a breaking point 130 of the circuit breaker 13 and connected, at the other end thereof, to the grounded enclosure 11.

The circuit breaker 13 comprises a breaking section 13a for carrying out a circuit breaking operation and an operating section 13b for operating the circuit breaking operation. The circuit breaker 13 according to the embodiment as illustrated has a single breaking point 130 and has the circuit breaking section arranged vertically. The operating section 13b operates the circuit breaking section 13a pneumatically, for example, to carry out the circuit breaking operation in response to an external instruction from a control panel 50.

The conductor system 120 comprises a plurality of conductor members 12, a plurality of connector portions 12a, and the conductor member 9 in the circuit breaker 13. The conductor members 12 are connected each other through the connector portions 12a or disconnecting switches 15. The conductor system 120 is divided into the line side or the power source side (bus-bar 17a and 17b side in Figs. 3A and 3E) with respect to the breaking point 130 of the circuit breaker 13.

The conductor system 120 has switchgears such as the circuit breaker 13, the disconnecting switches 15, and earthing switches 16. The conductor 120 system is connected, at the power source side thereof, to the bus-bars 17a and 17b through the disconnecting switches 15, respectively. The conductor system 120 is connected, at the line side thereof, to the bushing 14. The conductor system 120 of the line side has the disconnecting switch 15 at an intermediate position. The earthing switches 16 are disposed on opposite sides of the disconnecting switch 15 on the line side, so that the earthing switches 16 may be connected with the conductor system 120. Current transformers (CT) 19 are provided at portions where the conductor system 120 is connected to the breaking section 13a on the line side and the power source side, respectively.

The grounded enclosure 11 has a plurality of gas chambers 40 partitioned within the enclosure 11. More specifically, the grounded enclosure 11 is formed by a plurality of metal cylindrical members 111 which are connected each other to form a sealed enclosure as a whole, and insulating partitions 21 provided at all or some of connecting portions where the cylindrical members 111 are connected each other, for air-tightly sectioning interior spaces of the adjacent cylindrical members, respectively.

The cylindrical members 111 are grounded. The insulating partitions 21 functions to support the conductor members 9 and 12 constituting the conductor system 120 as well as to section the interior spaces.

The gas chambers 40 are air-tightly sealed spaces defined by the insulating partition 21 and the cylindrical members 111. One or more capacitor units 3 are provided at the chamber or chambers where the conductor system 120 of the line side with respect to the breaking point 13 is accommodated.

The grounded enclosure 11 is provided with pipeline system (not shown in Fig. 3A) which is capable of charging and discharging SF$_6$ gas into and from, at least, the chambers where the capacitor unit or units 3 is or are provided, independently of each other.

The gas chamber or chambers 40 of the grounded enclosure 11, where the capacitor unit or units 3 is or are accommodated, has or have an opening 112 on the cylinderical member 111 for communicating the inside and the outside of the grounded enclosure 11, and a lid member 113 which is removably fitted to the opening 112 for air-tightly sealing the opening 112. The capacitor unit or units 3 is or are mounted in the gas chamber or chambers 3 through the opening 112.

In the embodiment as illustrated in Fig. 3A, three openings 112 are provided at three portions of the grounded enclosure 11, respectively. More particularly, the opeinigs 112 are provided at en end portion A of the circuit breaker 13 on the line side with respect to the breaking point 130 of the circuit breaker 13, a portion under the bushing 14, and an intermediate position B. The number and position of the opening 112 are not limited to the example as illustrated in Fig. 3A.

The capacitor units 3 are disposed in the gas chambers 40 where the openings are provided, respectively, and connected each, at respective one end, to the conductor member 12 constituting the conductor system 120. The other end of the respective capacitor unit 3 is connected to the lid member 113 fitted to the opening 112. With this arrangement, the line side of the circuit breaker 13 is grounded through the capacitor.

For the connection with the conductor system 120, the capacitor unit 3 is connected to an end portion of the conductor member 9 at the position A, and connected to the coupling portion of the conductor members 12 at the position C. In general, the capacitor unit 3 may be connected to either the conductor member 9 or the conductor member 12, so long as the connecting position is located on the line side with respect to the breaking point 130.

The positions A and B are located at rather outer portions of the entire GIS configuration and relatively easily accessible, so that these positions are desirable or advantageous for a maintenance operation such as replacement of the capacitor units 3, or possible change of the capacitance of the capacitor such as an increase of the capacitor units 3.

Although all the openinigs 112 are used for installing the capacitor units 3 in the embodiment as illustrated, one of them, for example, the position C may be reserved for future use, while using only the positions A and C. The increase of the capacitor units 3 may alternatively be attained by increasing the number of the capacitor units 3 at each or some of the positions A, B and C. In the embodiment as illustrated, two capacitor units 3 are provided in each of the positions A, B and C. The arrangement of the capacitor units 3 is not limited to that of Fig. 3A.

Although two capacitor units 3 are used at each of the installation positions in the embodiment as illustrated, the number of the capacitor units 3 is determined by a capacitance of one capacitor unit 3, a necessary combined capacitance, and an encasing volume limit. The capacitor units 3 employable in the present invention are, for example, as shown in Figs. 6A and 6B.

According to the present embodiment, the capacitor units may be disposed at an end portion or a corner portion of the grounded enclosure 11. Therefore, the volume or space for admitting the capacitor units might be more ample as compared with the arrangement where the capacitor is disposed between the poles of the breaking circuit. This permits installation of a capacitor of larger capacitance. In this connection, it is to be noted that such positions as mentioned above are generally dead spaces, so that the capacitor units can be placed therein without influencing other components of GIS. Thus, no special spaces are needed for installation of the capacitor units. In addition, the capacitor units 3 may be disposed at a plurality of positions, which allows the number of the capacitor units connectable in parallel to be increased. Thus, desired increase of the capacitance of the capacitor can be attained easily.

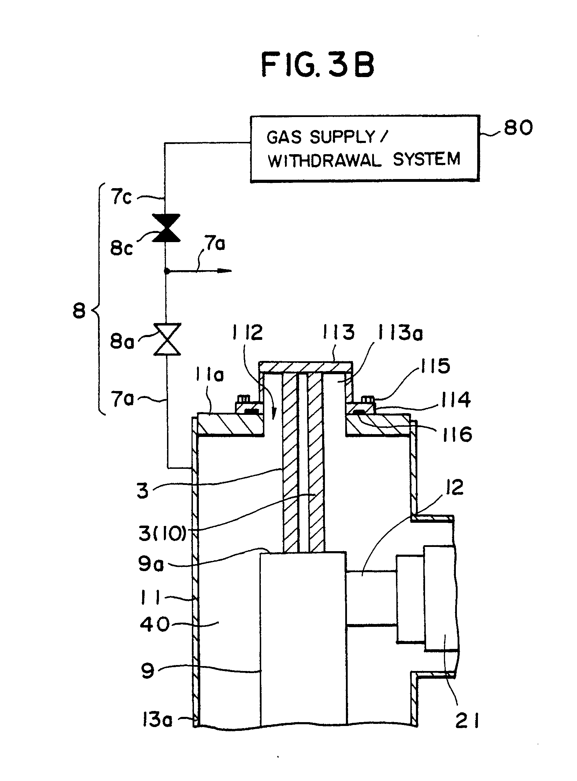

The detail of the connection of the capacitor unit at the position A will now be described, referring to Fig. 3B.

In the embodiment as illustrated in Fig. 3B, the grounded enclosure 11 for encasing a circuit breaker 13a has an end portion 11a, which has an opening 112 at a central position thereof for communicating the inside of the enclosure with the outside of the enclosure. A lid member 113 having a flange 114 is externally fitted to the opening 112 and fixed to the end portion 11a with the flange being secured by bolts 115. A gasket 116 is used to air-tightly seal the opening 112.

In the gas chamber 40, the capacitor units 3 are interposed between an end 9a of the conductor member 9 and an inner surface 113a of the lid member 113 to be electrically connected thereto. One of the capacitor units 3 may be replaced by a surge arrester 10.

The gas chamber 40 shown in Fig. 3B is provided with a pipeline system 8. The pipeline system 8 comprises individual pipelines 7a communicating with the respective gas chambers 40 which is independently subjected to gas supply/withdrawal operation and a common pipeline 7c communicating with a gas supplying/withdrawing apparatus 80. The pipeline system 8 further comprises a valve 8a provided in each of the individual pipeline 7a and a valve 8c provided in the common pipeline 7c. The individual pipeline 7a is provided for every gas chamber 40 which is independently supplied with gas and/or subjected to gas withdrawal. With this arrangement, an object gas chamber can be supervised with respect to the gas, independently of other gas chambers. Furthermore, gas supply/withdrawal can be effected independently.

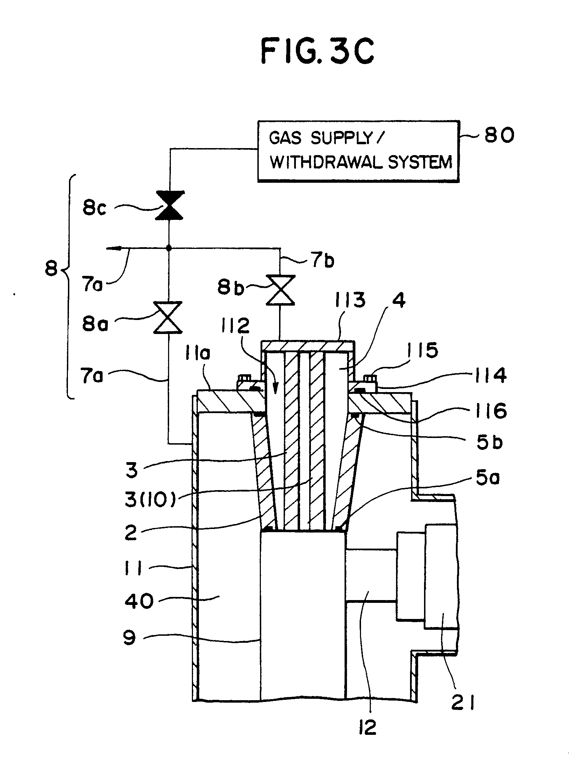

Although the capacitor unit 3 is disposed in the gas chamber 40 in the embodiment illustrated in Fig. 3B, the capacitor unit 3 is preferably placed within an independent gas unit in the case where an arc decomposition gas is produced as in a breaking section. Alternatively, the gas chamber 40 is sectioned by using the insulating partition 2 and the gaskets 5a and 5b for forming a small gas chamber 4 as shown in Fig. 3C. The capacitor unit 3 may be placed in the small gas chamber 4.

More specifically, the insulating partition 2 is provided around the opening 112 which is formed on the end portion 11a of the grounded enclosure 11 so that it may section a space around the opening 112 from the remaining space within the gas chamber 40. The insulating partition 2 is closely connected, at its end, to the conductor member 9, against which the capacitor units 3 placed in the so formed small gas chamber abut. The insulating partition 2, the conductor member 9 and the lid member 113 define the sealed small gas chamber 4. The capacitor unit 3 (and the surge arrester 10) is encased in the small gas chamber 4 as mentioned above.

The small gas chamber 4 also has an individual pipeline 7b and the valve 8b, which are connected to the pipeline system 8. With this arrangement, the capacitor unit 3 is protected from the arc decomposition gas, and the maintenance of the capacitor unit can be attained by only withdrawing a small amount of gas in the small gas chamber 4.

Although the capacitor unit is provided at the end portion of the breaking section 13a in the embodiment as shown in Figs. 3B and 3C, the capacitor unit 3 may be disposed at another suitable place. For example, Fig. 3D shows the capacitor unit 3 provided at the position C under the bushing 14. The arrangement of the capacitor unit 3 and the parts related thereto is similar to those of the examples shown in Figs. 3B and 3C.

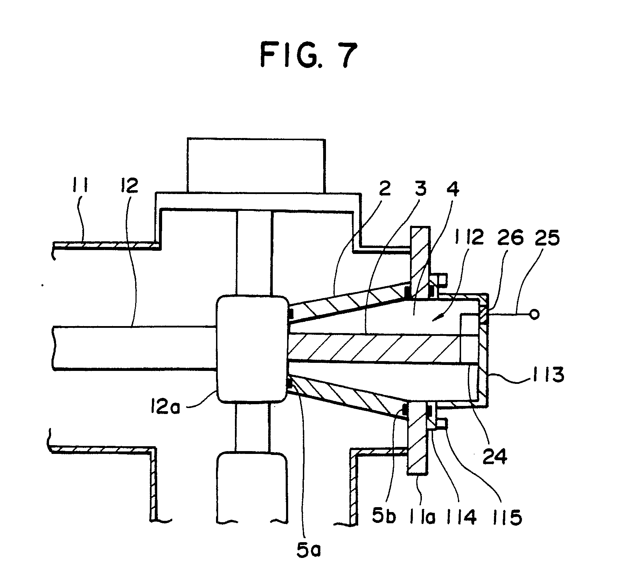

The end of the insulating partition 2 which is connected directly to the conductor member 9 in the embodiment of Fig. 3C (also in the embodiment of Fig. 7 as will be described later) may alternatively be connected to an end member (not shown) of an electrically conductive material which is connected to the conductor 9. The end member may function not only as a sealing member, but also as an electrode.

In this case, the cover 11a of the grounded enclosure 11, the insulating partition 2, the lid member 113 and the end member may be preliminarily arranged to form the small gas chamber 4, and the capacitor unit 3 and the surge arrester 10 are encased within the chamber 4 to provide a composite unit. The end member may be omitted to form a composite unit.

In the composite unit, either the capacitor or the surge arrester is provided as the insulating partition 2 and the other is mounted within the chamber. In this case, the size of the small gas chamber can be further reduced.

Fig. 7 shows a further embodiment of the present invention in which a voltage detection system is applied to the capacitor unit.

The present embodiment has a configuration similar to that of Fig. 3C. The grounded enclosure 11 has the end portion 11a with the central opening 112 for communication between the outside and the inside of the grounded enclosure 11. The lid member 113 with the flange 114 is externally fitted to the opening 112 and fixed to the end portion 11a with the flange 114 fastened to the end portion 11a by the bolts 115 through the gasket 116. Thus, the small gas chamber 4 is formed. The capacitor unit 3 is placed in the small gas chamber 4, and the earth side of the capacitor unit 3 is insulated by an insulator 24 to take out a dividing electrode 25. The dividing electrode 25 is insulated from the lid member 113 by the insulator 26.

The dividing electrode 25 is utilized for voltage detection or detection of abnormality occurring in GIS, when used with an apparatus for effecting such detections.

In the present embodiment, a surge arrester unit may further be provided in the small gas chamber in addition to the capacitor unit 3. Alternatively, the material of the insulating partition 2 may be selected from materials usable for the surge arrester unit.

The dividing electrode provided in the present embodiment may be applied to any of the foregoing embodiments.

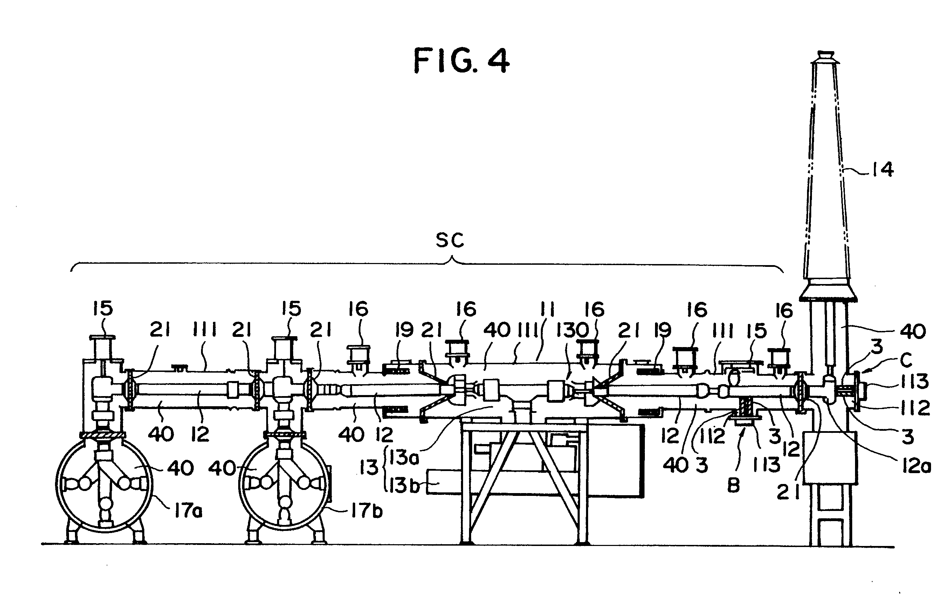

Fig. 4 shows a further form of GIS according to the present invention.

In this embodiment, the switching circuit SC is configured in a line, and the circuit breaker 13 employed therein is of a horizontally extending type and has a breaking section with two breaking points. Other components of GIS are similar to those of the foregoing embodiment of GIS. The arrangement of the capacitor unit 3 will be focussed now.

The capacitor units 3 are provided at positions (two positions) which are on the line side with respect to the breaking point 130 of the breaking section 13a, which is proximate to the line side. The capacitor units 3 are connected to the conductor system 120 at the positions.

The first position is indicated by B in Fig. 4, which is diametrically opposite to the disconnecting switch 15 with reference to the cylindrical member 111. This position B is selected because an opening 112 formed in the cylindrical member 111 for mounting the disconnecting swich 15 may be utilized for placing the capacitor unit 3.

The second position is indicated by C, which is under the bushing 14 as in the embodiment shown in Fig. 3A.

The detail structure of the portion where the capacitor unit 3 is accommodated is similar to that of the embodiment of Fig. 3A.

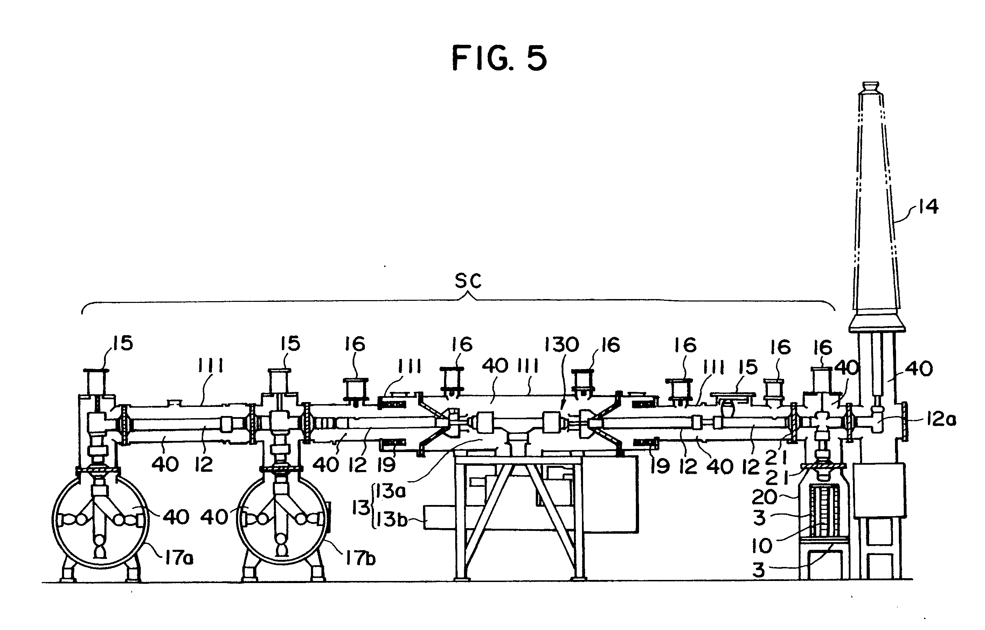

Fig. 5 shows a still further form of GIS according to the present invention.

In this embodiment, the switching circuit SC is configured in a line, and the circuit breaker 13 employed therein has a breaking section 13a arranged to extend horizontally and has two breaking points. The basic constituent of this embodiment is similar to that of Fig. 4. The description will now be made for the detailed arrangement of the capacitor unit 3.

The capacitor unit 3 is provided in a surge arrester housing 20 together with the surge arrester unit 10. The surge arrester housing 20 is located at a position under the bushing 14. A conductor member 12 which branches from the conductor system 120 is led into the surge arrester housing 20. The capacitor unit 3 and the the surge arrester unit 10 are each connected, at one end thereof, to an end of the conductor member 12. Another end of each of the capacitor unit 3 and the surge arrester unit 10 is connected to a bottom of the surge arrester housing 20 and grounded.

If the surge arrester housing 20 has an ample space, the capacitor unit 3 can be increased or extended easily. According to necessity, the housing may be replaced by another housing of a larger size to accommodate more capacitor units.

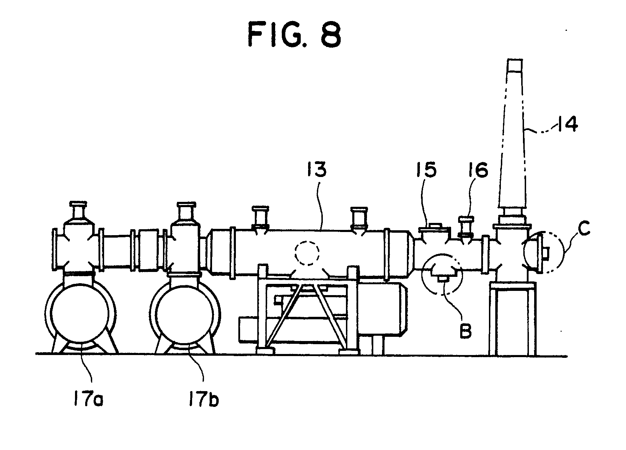

A still further form of GIS according to the present invention will now be described, referring to Fig. 8.

This form of GIS is similar in configuration to that of Fig. 4. The capacitor unit is placed alone or in combination with the surge arrester unit at the positions B and C as shown in Fig. 8. In this embodiment, the enclosure has the openings 112 and the lid members 113 fitted thereto, resepectively. The capacitor units are placed inside the respective openings 112.

In this embodiment, the small gas chamber 4 is formed inside the grounded enclosure 11, so that capacitor unit and the surge arrester unit may be placed without changing the external configuration or increasing the size of the gas-insulated switchgear.

In each of the foregoing embodiments, an device other than the capacitor and the surge arrester may further be provided.

The capacitor unit may be placed between the poles of the circuit breaker as well as on the line side of the conductor system with respect to the breaking point.

According to the present invention, a capacitor of a large capacitance can be placed alone or in combination with a surge arrester in the grounded enclosure without increasing the size of the external size of the gas circuit breaker. This means that the gas-insulated switchgear can be configured compact and the interruption limit of the circuit breaker incorporated therein can be improved.

Further according to the present invention, the capacitor or the surge arrester can be subjected to a maintenance operation etc. only by handling the gas within the limited gas chamber. The operating time for maintenance or enhancement operation can be shortened. Especially, with the arrangement the grounded enclosure is formed with the opening and the lid member is removably fitted to the opening to air-tightly seal the enclosure, replacement of the capacitor unit or increase or extension of the capacitor unit can be carried out easily.

**Claims**

1. A gas-insulated switchgear comprising:
a circuit breaker,
a conductor system connected to the circuit breaker for carrying a current thereto,
a grounded enclosure encasing the circuit breaker and the conductor system therein together with an insulating medium gas, and
at least one capacitor which is connected, at one end thereof, to a conductor of the conductor system which is on a line side with respect to a breaking point of the circuit breaker, and connected, at another end thereof, to the grounded enclosure.

2. A gas-insulated switchgear as claimed in claim 1, wherein said conductor system comprises a plurality of conductor members and a plurality of coupling portions where the conductor members are electrically and mechanically connected each other, at least one of said coupling portions is used for connection with the capacitor.

3. A gas-insulated switchgear as claimed in claim 2, wherein at least one of the coupling portions is a portion where the conductor members are coupled at a right angle with each other.

4. A gas-insulated switchgear as claimed in claim 1, which includes a plurality of connection portions provided for connecting said at least one capacitor along the conductor system.

5. A gas-insulated switchgear as claimed in claim 4, wherein said at least one capacitor is dispersedly provided at the connection poritons.

6. A gas-insulated switchgear as claimed in claim 4, wherein the conductor system comprises a plurality of conductor members and a plurality of coupling portions where the conductor members are electrically and mechanically connected each other, and at least one of the connection portions is selected from the coupling portions.

7. A gas-insulated switchgear as claimed in claim 1, which includes connection positions provided for connection with said at least one capacitor, at least one of said connection positions being selected to be one of the conductor members.

8. A gas-insulated switchgear as claimed in claim 7, wherein the connection position is an end of the conductor member.

9. A gas-insulated switchgear as claimed in claim 7, wherin said one of the conductor members is a conductor member included in the circuit breaker.

10. A gas-insulated switchgear as claimed in claim 7, wherein said one of the conductor members is a conductor member branching from the conductor system.

11. A gas-insulated switchgear as claimed in claim 1, wherein said grounded enclosure comprises at least one insulating partition for sectioning the interior of the grounded enclosure and a plurality of gas chambers sectioned by said at least one insulating partition, and

said capacitor is placed in one of the gas chambers where the conductor system on the line side with respect to the breaking point of the circuit breaker is accommodated.

12. A gas-insulated switchgear as claimed in claim 1, wherein said grounded enclosure comprises a plurality of metal cylindrical members connected each other to form a sealed enclosure as a whole and at least one insulating partition provided at least one of cylindrical member connecting portions to seal the interiors of the adjacent cylindrical members, said sealed interiors forming the gas chambers.

13. A gas-insulated switchgear as claimed in claim 11, wherein said grounded enclosure has a pipeline system which is capable of charging and discharging the insulating medium gas for the gas chambers in which said at least one capacitor is placed, independently of each other.

14. A gas-insulated switchgear as claimed in claim 11, wherein said gas chamber, in which said at least one capacitor is placed, comprises an opening formed on a wall of the grounded enclosure for communication between the inside and the outside of the grounded enclosure and a lid member removably fitted to the opening to air-tightly seal the opening, said opening being used for mounting the capacitor into the enclosure.

15. A gas-insulated switchgear as claimed in claim 14, whrein said opening is provided at a position where a portion of the conductor member constituting the conductor system is accessible, and said insulating partition is provided, en-closing the opening to define a space sectioned from a remaining space in the enclosure, said insulating partition having an end which is in close contact with the conductor memebr, said insulating partition defining a sealed space, in cooperation with the conductor member and the lid member, to form a small gas chamber, said small gas chamber being used for mounting the capacitor therein.

16. A gas-insulated switchgear as claimed in claim 15, which further comprises a gas pipeline communicating with said small gas chamber and a valve provided in the gas pipeline.

17. A gas-insulated switchgear as claimed in claim 5, which further comprises at least cne surge arrester, said surge arrester being provided alone or in combination with the capacitor, at at least one of the connection portions along the conductor system.

18. A gas-insulated swtichgear as claimed in claim 10, which further comprises at least one surge arrester, said surge arrester being connected alone or in combination with the capacitor, to the conductor member branching from the conductor system.

19. A gas circuit breaker comprising:

a circuit breaker;

a conductor system connected to the circuit breaker to carry a current thereto;

a grounded tank for encasing the circuit breaker and the conductor system together with an insulating medium gas therein;

at least one capacitor and surge arrester which are connected, at respective one end, to the conductor system which is on a line side with respect to a breaking point of the circuit breaker, and connected, at respective another end, to the grounded tank; and

an insulating partition for sectioning a space for accommodating the capacitor and the surge arrester from a remaining space in the grounded tank to define a small gas chamber in said space for accommodating the capacitor and the surge arrester;

said capacitor and surge arrester being placed in said small gas chamber.

20. A gas circuit breaker as claimed in claim 19, which further comprises a gas pipeline communicating with said small gas chamber and a valve provided in the pipeline.

21. A gas-insulated switchgear comprising:

a circuit breaker;

a conductor system connected to the circuit breaker;

a grounded enclosure encasing the circuit breaker and the conductor system therein together with an insulating medium gas;

said grounded enclosure including a plurality of metal cylindrical members connected each othe to form a sealed enclosure as a whole, an at least one insulating partition provided at least one of cylindrical member connecting portions to seal and section the interior of the adjacent cylindrical members from each other, and a plurality of gas chambers formed by said insulating partition in cooperation with the cylindrical members;

said small gas chambers being subjected to gas supply/drawal independently of each other;

at least one of said gas chambers having an opening formed on a wall of the cylindrical member for communication between the outside and the inside of the enclosure, and a lid member removably fitted to the opening to air-tightly seal the opening;

said opening and said lid member being formed in association with the conductor system accommodated in said cylindrical member so that a capacitor may be mounted through the opening.

22. A gas-insulated switchgear comprising:

a circuit breaker;

a conductor system connected to the circuit breaker;

a grounded enclosure encasing the circuit breaker; and the conductor system therein together with an insulating medium gas;

at least one capacitor and surge arrester which are connected, at respective one end, to the conductor system which is on a line side with respect to a breaking point of the circuit breaker, and connected, at respective another end, to the grounded tank; and

an insulating partition of a dielectric material for sectioning a space for accommodating the capacitor and the surge arrester from a remaining space in the grounded tank to define a small gas chamber in said space for accommodating the capacitor and the surge arrester;

said surge arrester being placed in said small gas chamber.

23. A gas-insulated switchgear comprising:

a circuit breaker;

a conductor system connected to the circuit breaker;

a grounded enclosure encasing the circuit breaker and the conductor system therein together with an insulating medium gas;

at least one capacitor and surge arrester which are connected, at respective one end, to the conductor system which is on a line side with respect to a breaking point of the circuit breaker, and connected, at respective another end, to the grounded tank; and

an insulating partition of a high resistance for sectioning a space for accommodating the capacitor and the surge arrester from a remaining space in the grounded tank to define a small gas chamber in said space for accommodating the capacitor and the surge arrester;

said capacitor being placed in said small gas chamber.

24. A composite capacitor-surge arrester unit comprising:

an insulating partition for sectioning an interior space of a grounded enclosure in which said insulating partion is to be mounted;

a capacitor and a surge arrester to be accommodated in the space sectioned by said insulating partition; and

a sealing member for sealing an opening of the enclosure through which said capacitor and surge arrester are mounted.

25. A composite capacitor-surge arrester unit comprising:

an insulating partition, made of a material selected from a group consisting of a dielectric material and a high resistance material, for sectioning an interior space of a grounded enclosure in which said insulating partion is to be mounted;

a circuit element to be accommodated in the space sectioned by said insulating partition; and

a sealing member for sealing an opening of the enclosure through which said circuit element is mounted;

said circuit element being a surge arrester when said insulating material is made of a dielectric material or being a capacitor when said insulating material is made of a high resistance material.

26. A composite capacitor-surge arrester unit as claimed in claim 25, which further comprises a gas pipeline for communicating the interior space sectioned by the insulating partition with a space outside the sealing member, and a valve provided in the gas pipeline.

27. A gas-insulated switchgear as claimed in claim 11, which further comprises a surge arrester and a housing for encasing the surge arrester, said housing being connected to the grounded enclosure, said capacitor being placed in said housing for the

surge arrester.

# FIG. 1

# FIG.2

EP 0 417 813 A2

# FIG. 3A

# FIG. 3B

GAS SUPPLY /
WITHDRAWAL SYSTEM — 80

# FIG. 3C

# FIG. 3D

# FIG. 3E

# FIG. 4

EP 0 417 813 A2

FIG. 5

# FIG. 6A

# FIG. 6B

# FIG. 7

# FIG. 8

# FIG. 9

a INTERUPTION LIMIT CHARACTERISTIC OF GCB

b RATE OF INITIAL RISE OF TRANSIENT RECOVERY VOLTAGE OF A CIRCUIT WITHOUT CAPACITOR

c RATE OF INITIAL RISE OF TRANSIENT RECOVERY VOLTAGE OF A CIRCUIT WITH CAPACITOR

INTERRUPTION LIMIT

INTERRUPTION LIMIT

RATE OF INITIAL RISE OF TRANSIENT RECOVERY VOLTAGE , KV/$\mu$s

INTERRUPTING CURRENT , KA